# EUROPEAN PATENT APPLICATION

(11) **EP 2 608 318 A1**
(43) Date of publication of application: **26.06.2013**
(21) Application number: 11817963.9
(22) Date of filing: 11.05.2011
(51) Int. Cl.: H01R 4/18, H01R 4/62, H01R 4/72

(54) **TERMINAL FITTING**

(30) Priority: 17.08.2010 JP 2010182507
(71) Applicant: Sumitomo Wiring Systems, Ltd., Yokkaichi-shi, Mie 510-8503 (JP)
(72) Inventor: MORIKAWA, Satoshi, Yokkaichi-shi Mie 510-8503 (JP); NAKATA, Takehiro, Yokkaichi-shi Mie 510-8503 (JP)
(74) Representative: Müller-Boré & Partner Patentanwälte
(86) International application number: PCT/JP2011/060829
(87) International publication number: WO 2012/023314

(57) **Abstract**

The present invention aims to provide a terminal fitting which enables the use of existing connectors. A terminal fitting (10) of the present invention includes a terminal connecting portion (11), a wire connecting portion (12), a coupling portion (13) located between the terminal connecting portion (11) and the wire connecting portion (12) to connect the both and having a U-shaped cross section. A heat-shrinkable tube (40) is attached to the wire connecting portion (12). Further, a constricted portion (23) constricted inwardly relative to the terminal connecting portion (11) and the wire connecting portion (12) is provided at the coupling portion (13). The terminal fitting (10) includes a sealing portion (30) adapted to seal the interior of the constricted portion (23) and to have an end part of the tube (40) attached thereto. With this configuration, the terminal fitting (10) of the present invention can reduce external dimensions of the sealing portion (30) by an amount corresponding to the construction of the constricted portion (23). Thus, it is not necessary to make the dimensions of an opening of a cavity larger and an existing connector (60) can be used as it is.

## Description

### Technical Field

The present invention relates to a terminal fitting.

### Background Art

A terminal fitting disclosed in patent literature 1 includes a terminal connecting portion to be connected to a mating terminal fitting, a wire connecting portion to be connected to a core at an end portion of a wire and a coupling portion located between the terminal connecting portion and the wire connecting portion to couple the both and having a channel-shaped cross section.

A heat-shrinkable tube is attached to the wire connecting portion to cover the core by the tube. Further, an end part of the tube is held in close contact with both inner and outer surfaces of the coupling portion. In this case, after the coupling portion is covered by the end part of the tube, a mold corresponding to the shape of the coupling portion is pushed into the coupling portion and the end part of the tube is caused to shrink in a state held in close contact with the inner surface of the coupling portion. In this way, a clearance between the coupling portion and the tube is filled up to ensure a good waterproof property in the wire connecting portion.

The above tube is required to have such a following property as to be flexibly deformable in conformity with the shape of the coupling portion. Contrary to this, for example, if the interior of the coupling portion is sealed by a sealing portion and the end part of the tube is attached to the sealing portion, the following property of the tube is not very strictly required. However, in the case of such a configuration, if external dimensions of the sealing portion exceed those of the terminal connecting portion and the wire connecting portion, the sealing portion may not enter a cavity of a housing in accommodating the terminal fitting into the housing of a connector. Then, the dimensions of an opening of the cavity have to be made larger, which results in a design change of the connector. Therefore, there is a problem that existing connectors cannot be used.

### Citation List

### Patent Literature

Patent Literature 1:
Japanese Unexamined Patent Publication No. 2010-165630

### Summary of the Invention

### Technical Problem

The present invention was developed in view of the above problem and an object thereof is to enable the use of existing connectors.

### Solution to Problem

The present invention is mainly characterized by comprising a terminal connecting portion to be connected to a mating terminal fitting; a wire connecting portion to be connected to a core at an end portion of a wire; a coupling portion located between the terminal connecting portion and the wire connecting portion to connect the both and having a U-shaped cross section; a heat-shrinkable tube to be attached to the wire connecting portion while covering the core; a constricted portion provided at the coupling portion and constricted inwardly relative to the terminal connecting portion and the wire connecting portion; and a sealing portion adapted to seal the interior of the constricted portion and to have an end part of the tube attached thereto.

According to this, the coupling portion includes the constricted portion constricted inwardly relative to the terminal connecting portion and the wire connecting portion, the interior of this constricted portion is sealed by the sealing portion and the end part of the tube is attached to the sealing portion. Thus, a good waterproof property in the wire connecting portion is ensured and, in addition, the external dimensions of the sealing portion can be made smaller by an amount corresponding to the constriction of the constricted portion. Therefore, it is not necessary to make the dimensions of an opening of a cavity larger and an existing connector can be used as it is.

Further, the present invention may be configured as follows.
(1) The coupling portion includes a bottom plate and a pair of side plates standing up from opposite lateral edges of the bottom plate, and the constricted portion is formed on both the bottom plate and the opposite side plates. By doing so, the enlargement of the sealing portion is more reliably avoided.
(2) The wire connecting portion includes a wire barrel to be connected to the core and an insulation barrel to be connected to a coating of the wire; and the tube is attached to the sealing portion, the wire barrel and the insulation barrel and covers a leading end part of the coating. According to this, the end part of the wire including the coating is reliably waterproofed.
(3) Both ends of the sealing portion are arranged at positions retracted inwardly from both ends of the terminal connecting portion. If the external dimensions of the sealing portion are made sufficiently smaller, the sealing portion can be smoothly accommodated into the cavity.
(4) The constricted portion is formed with a through hole and a part of the sealing portion serves as an entering portion to be inserted and filled in the through hole. By doing so, the sealing portion and the constricted portion are made more integral.
(5) The sealing portion is held in close contact with both inner and outer surfaces of the constricted portion by mold forming, and parts of the sealing portion at inner and outer sides of the constricted portion are connected to each other via the entering portion. By doing so, the separation of the sealing portion from the constricted portion is more reliably avoided.
(6) The sealing portion is formed of a resin material into a block in advance. In this way, the sealing portion may not necessarily be mold-formed.
(7) The constricted portion includes a straight portion extending in an axial direction, a first tapered portion located on the terminal connecting portion side and inclined gradually inwardly toward the straight portion and a second tapered portion located at the wire connecting portion side and inclined gradually inwardly toward the straight portion, and a leading end part of the core is arranged in the second tapered portion in a state where the wire connecting portion is connected to the core. The loosening of the leading end part of the core is prevented by the second tapered portion.
(8) The sealing portion seals an entire U-shaped inner space in the constricted portion and surrounds the exterior of the constricted portion over the entire circumference. By doing so, the surrounding of the constricted portion is more reliably sealed by the sealing portion.
(9) The core is made of aluminum or aluminum alloy. If the terminal fitting is made of a metal other than aluminum or aluminum alloy, the occurrence of electrolytic corrosion is promoted if an electrolyte such as water is present between the core and the wire connecting portion. However, according to the present invention, the entrance of water into the wire connecting portion is prevented and the occurrence of electrolytic corrosion is prevented since the core is covered by the tube and the end part of the tube is attached to the sealing portion.

### Effect of the Invention

The present invention has an advantage of enabling the use of existing connectors as they are since external dimensions of the sealing portion can be reduced.

### Brief Description of the Drawings

FIG. 1 is a plan view of a first embodiment of the present invention showing a state where a terminal fitting is accommodated in a housing of a connector,
FIG. 2 is a side view showing the state where the terminal fitting is accommodated in the housing of the connector,
FIG. 3 is a plan view of the terminal fitting,
FIG. 4 is a plan view of a terminal fitting according to a second embodiment,
FIG. 5 is a side view of the terminal fitting,
FIG. 6 is a section showing a state where a constricted portion is sealed by a sealing portion,
FIG. 7 is a section of a third embodiment showing a state where a constricted portion is sealed by a sealing portion, and
FIG. 8 is a section of a fourth embodiment showing a state where a terminal fitting is accommodated in a housing of a connector.

### Embodiments of the Invention

### <First Embodiment>

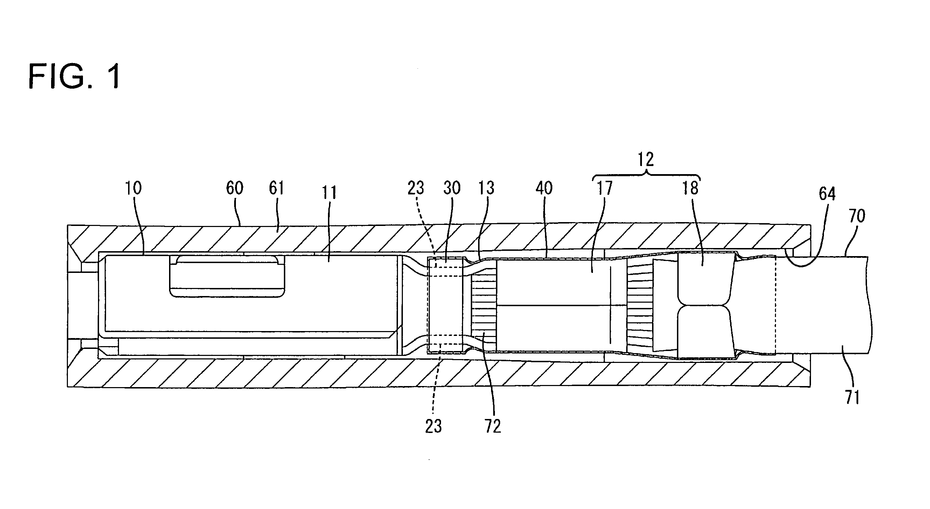

A first embodiment of the present invention is described with reference to FIGS. 1 to 3. A terminal fitting 10 according to the first embodiment is to be accommodated into a housing 61 of a connector 60. The housing 61 is connected to an unillustrated mating housing, and the terminal fitting 10 is connected to an unillustrated mating terminal fitting accommodated in the mating housing when the two housings are properly connected.

The housing 61 is made of synthetic resin and in the form of a block as a whole and includes a cavity 62 inside. A locking lance 63 is formed to project forward at the bottom surface of the cavity 62. The terminal fitting 10 is inserted into the cavity 62 of the housing 61 from behind, and the properly inserted terminal fitting 10 is resiliently locked by the locking lance 63. Note that the housing 61 is connected to the unillustrated mating housing.

The terminal fitting 10 is integrally formed such as by bending an electrically conducive metal plate made of e.g. copper or copper alloy. The terminal fitting 10 includes a terminal connecting portion 11, a wire connecting portion 12 located behind the terminal connecting portion 11 and a coupling portion 13 located between the terminal connecting portion 11 and the wire connecting portion 12 to couple the both.

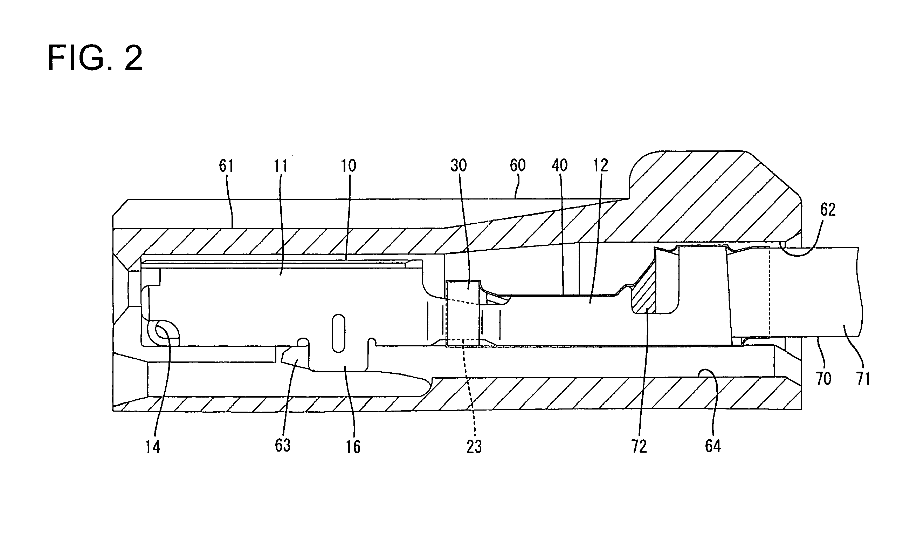

The terminal connecting portion 11 is substantially in the form of a rectangular tube and is electrically connected to the unillustrated mating terminal fitting accommodated in the mating housing when the two housings are properly connected. A flexible resilient contact piece 14 is arranged in the terminal connecting portion 11. The resilient contact piece 14 is folded backward from the front end of a bottom plate 15 of the terminal connecting portion 11 and is resiliently brought into contact with the mating terminal fitting inserted into the terminal connecting portion 11. Further, an unillustrated lance hole is formed in the bottom plate 15 of the terminal connecting portion 11. When the terminal fitting 10 is properly inserted into the cavity 62, the locking lance 63 is resiliently fitted into the lance hole and arranged to be engageable with the front edge of the lance hole (see FIG. 2). In this way, the terminal fitting 10 is retained in the cavity 62.

Further, a stabilizer 16 formed by cutting and bending as the lance hole is formed is formed to project from a side wall of the terminal connecting portion 11. The stabilizer 11 is in the form of a plate piece and functions to prevent the terminal fitting 10 from being inserted upside down into the housing 61 and guide an insertion movement into the cavity 62 by being fitted into a guiding groove 64 formed in the bottom surface of the cavity 62.

The wire connecting portion 12 is composed of a wire barrel 17 and an insulation barrel 18 located behind the wire barrel 17 and connected to an end portion of a wire 70. Here, the wire 70 is composed of a core 72 and a coating 71 surrounding the core 72. In the case of this embodiment, the core 72 is made of aluminum or aluminum alloy and the coating 71 is made of insulating resin. The coating 71 is removed at the end portion of the wire 70 to expose the core 72.

The wire barrel 17 is formed such that a pair of front barrel pieces 19 stand up from opposite lateral edges of the bottom plate 15, and crimped and connected to the core 72 at the end portion of the wire 70. The insulation barrel 18 is likewise formed such that a pair of rear barrel pieces 21 stand up from the opposite lateral edges of the bottom plate 15, and crimped and connected to the coating 71 of the wire 70. Note that external dimensions of the terminal connecting portion 11 are larger than those of the wire barrel 17 and smaller than those of the insulation barrel 18. However, unlike the shown embodiment, the external dimensions of the insulation barrel 18 may be smaller than those of the terminal connecting portion 11 in some cases.

The coupling portion 13 is composed of the bottom plate 15 and a pair of side plates 22 standing up from the opposite lateral edges of the bottom plate 15, and has a channel-shaped cross section, in other words, a U-shaped cross section.
The bottom plate 15 extends over the entire length of the terminal fitting 10 while being shared by the coupling portion 13, the terminal connecting portion 11 and the wire connecting portion 12. The front ends of the side plates 22 are connected to the rear ends of the side walls of the terminal connecting portion 11 and the rear ends thereof are connected to the front ends of the front barrel pieces 19 of the wire connecting portion 12.

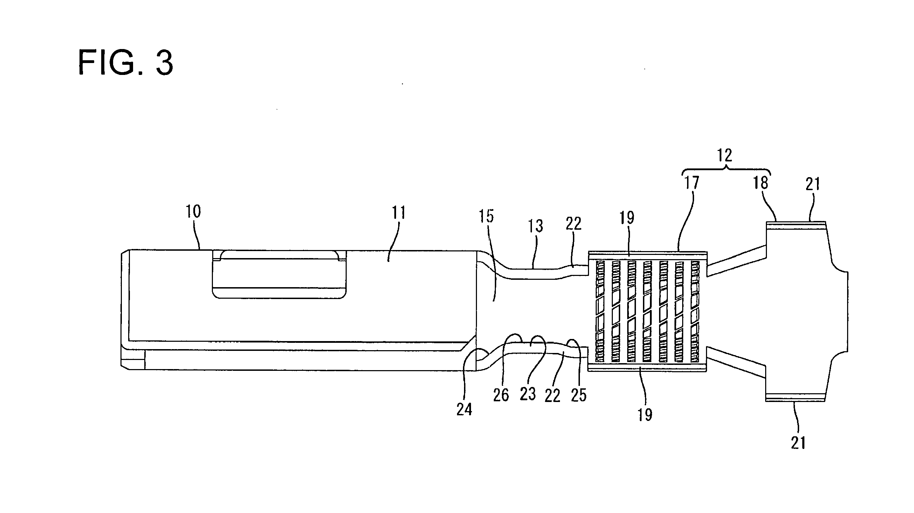

Further, the coupling portion 13 is formed with a constricted portion 23 constricted inwardly relative to the terminal connecting portion 11 and the wire connecting portion 12. The constricted portion 23 is recessed in a plan view and a side view and formed on both the opposite side plates 22 and the bottom plate 15. The constricted portion 23 is composed of a first tapered portion 24 inclined gradually inwardly (toward an axial center) from the rear end of the terminal connecting portion 11 to a back side, a second tapered portion 25 inclined gradually inwardly from the front end of the wire connecting portion 12 to a front side and a straight portion 26 connected to the rear end of the first tapered portion 24 and the front end of the second tapered portion 25 and extending in forward and backward directions (axial direction) (see FIG. 3). In a state where the wire barrel 17 is connected to the core 72, a leading end part of the core 72 is arranged in the second tapered portion 25.

A sealing portion 30 is mounted at the constricted portion 23. The sealing portion 30 is formed into a block enclosing the constricted portion 23 by resin molding, seals an entire U-shaped inner space in the constricted portion 23 and surrounds the exterior of the constricted portion 23 over the entire circumference. Further, the sealing portion 30 has a thickness over the length range of the straight portion 26 and is held in close contact with both inner and outer surfaces of the straight portion 26. Note that the sealing portion 30 has a rectangular cross section with four rounded corners.

By forming the sealing portion 30 at the constricted portion 23, the outward projecting amount of the constricted portion 30 is suppressed by an amount corresponding to the construction (recess) of the constricted portion 23. Thus, both left and right ends of the sealing portion 30 are located more inwardly than both left and right ends of the terminal connecting portion 11 (see FIG. 1). Further, the upper end of the sealing portion 30 is arranged at a position lower than the upper end of the terminal connecting portion 11 and the lower end thereof is arranged substantially at the same height as the lower end of the terminal connecting portion 11 (see FIG. 2).

A heat-shrinkable tube 40 is attached to the sealing portion 30. The tube 40 is made of a waterproof resin material (e.g. electron beam cross-linked polyethylene) which shrinks upon heating and is impervious to moisture. The tube 40 is in the form of a cylinder long and narrow in forward and backward directions, a front end part is held in close contact with the outer peripheral surface of the sealing portion 30 and a part excluding the front end part is held in close contact with the outer peripheral surface of the wire connecting portion 12. That is, the tube 40 is attached to the sealing portion 30, the wire barrel 17 and the insulation barrel 18 and covers the core 72 and a leading end part of the coating 71 from above.

The structure of the terminal fitting 10 according to the first embodiment is as described above. Next, a manufacturing method for the terminal fitting 10 and the like are described.
First, the terminal fitting 10 is assembled (see FIG. 3) and, in that state, the sealing portion 30 is formed around the constricted portion 23 by insert molding. Subsequently, the wire barrel 17 is crimped and connected to the core 72 of the wire 70 and the insulation barrel 18 is crimped and connected to the coating 71 of the wire 70.

Subsequently, the wire connecting portion 12 of the terminal fitting 10 is inserted into the tube 40. At this time, the front end part of the tube 40 is arranged at a position to cover the sealing portion 30, and the rear end part of the tube 40 is arranged at a position to cover the coating 71 right behind the insulation barrel 18. In that state, the tube 40 is caused to shrink by a heating means such as a heater and is tightly attached to a part from the front end of the sealing portion 30 to the coating 71 behind the insulation barrel 18. In this way, the interior of the tube 40 is sealed in a liquid-tight manner to prevent the entrance of moisture.

Thereafter, the terminal fitting 10 connected with the above wire 70 is inserted into the housing 61 of the connector 60. At this time, since the external dimensions of the sealing portion 30 are made smaller by the constricted portion 23, the interference of the front end part of the tube 40 with the inner surfaces (excluding the bottom surface) of the cavity 62 is avoided (see FIGS. 1, 2).

As described above, according to this embodiment, the coupling portion 13 includes the constricted portion 23 constricted inwardly relative to the terminal connecting portion 11 and the wire connecting portion 12, the interior of the constricted portion 23 is sealed by the sealing portion 30 and the front end part of the tube 40 is attached to the sealing portion 30. Thus, a good waterproof property in the wire connecting portion 12 is ensured and, in addition, the external dimensions of the sealing portion 30 are made smaller by an amount corresponding to the constriction of the constricted portion 23. Therefore, it is not necessary to make the dimensions of an opening of the cavity 62 larger and the existing connector 60 can be used as it is.

Further, since the constricted portion 23 is formed on both the bottom plate 15 and the opposite side plates 22 of the coupling portion 13, the enlargement of the sealing portion 30 is reliably avoided.
Further, since the sealing portion 30 is held in close contact with both inner and outer surfaces of the constricted portion 23 by mold forming, the separation of the sealing portion 30 from the constricted portion 23 is avoided. In this case, since the sealing portion 30 is held in close contact with the outer surfaces of the constricted portion 23, the external dimensions of the sealing portion 30 tend to increase. Thus, the above effect can be more effectively enjoyed.

Furthermore, since the core 72 and the terminal fitting 10 are made of different metals in this embodiment, electrolytic corrosion may occur in the wire connecting portion 12. However, since the core 72 is covered by the tube 40 and the front end part of the tube 40 is attached to the sealing portion 30, the occurrence of electrolytic corrosion in the wire connecting portion 12 is prevented.

### <Second Embodiment>

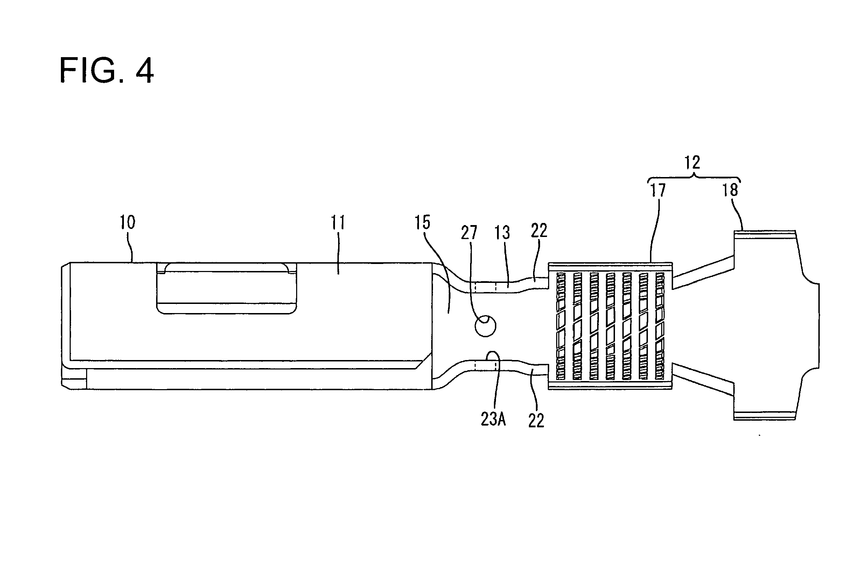

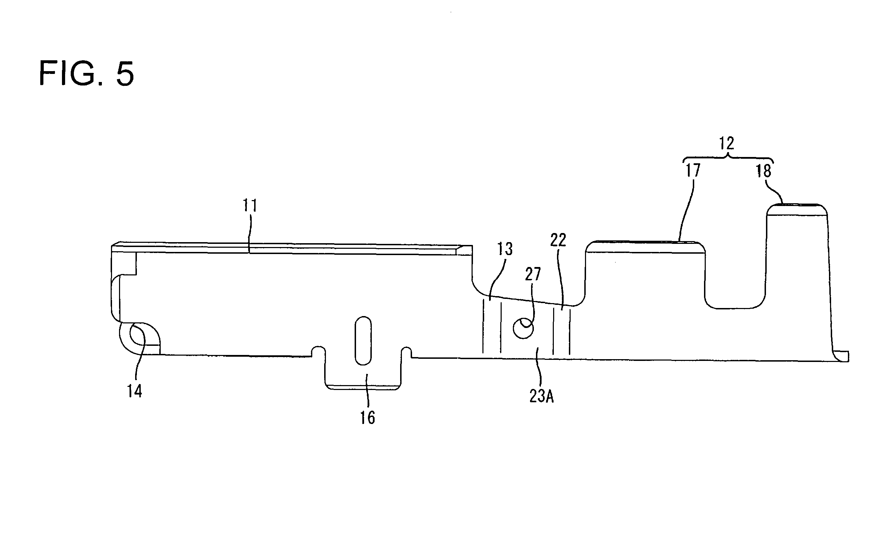

FIGS. 4 to 6 show a second embodiment of the present invention. In the second embodiment, structures of a constricted portion 23A and a sealing portion 30A partly differ from those in the first embodiment. However, the other configuration is similar to the first embodiment and components similar to those of the first embodiment are denoted by the same reference signs and not repeatedly described.

Circular through holes 27 are formed in a central part of a bottom plate 15 and central parts of both side plates 22 of the constricted portion 23A. In insert-molding the sealing portion 30A, resin flows into the through holes 27 of the constricted portion 23A.

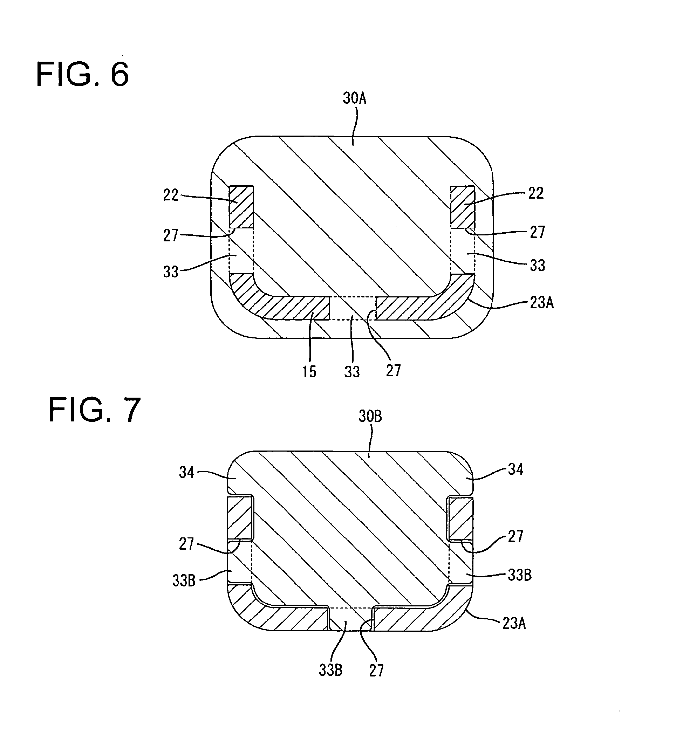

Further, the resin having flowed into the through holes 27 is solidified, whereby the sealing portion 30A is formed with entering portions 33 (see FIG. 6). These entering portions 33 fill up the entire inner spaces of the through holes 27. Parts of the sealing portion 30A located at the inner and outer sides of the constricted portion 23A are integrally connected to each other via the entering portions 33. Thus, according to the second embodiment, the rigidity of the sealing portion 30A is increased and the separation of the sealing portion 30A from the constricted portion 23A is reliably avoided.

### <Third Embodiment>

FIG. 7 shows a third embodiment of the present invention. In the third embodiment, a constricted portion 23A is formed with through holes as in the second embodiment. However, a sealing portion 30B is not formed by insert molding unlike the first and second embodiments. The sealing portion 30B in this case is formed of a resin material into a block in advance, and a plurality of entering portions 33B project at positions corresponding to the through holes 27. Further, a pair of projecting pieces 34 laterally project at an upper end part of the sealing portion 30B. Such a sealing portion 30B is fitted into the constricted portion 23 from above and retained in the constricted portion 23 by fitting the respective entering portions 33B into the corresponding through holes 27 and arranging the projecting pieces 34 such that the projecting pieces 34 can come into contact with the upper ends of the side plates 22. Since the sealing portion 30B does not have a molded structure according to the third embodiment, it is not necessary to prepare a forming machine dedicated for mold forming. Further, since the sealing portion 30B and the constricted portion 23 are made more integral by the entering portions 33B, the separation of the sealing portion 30B from the constricted portion 23 is avoided.

### <Fourth Embodiment>

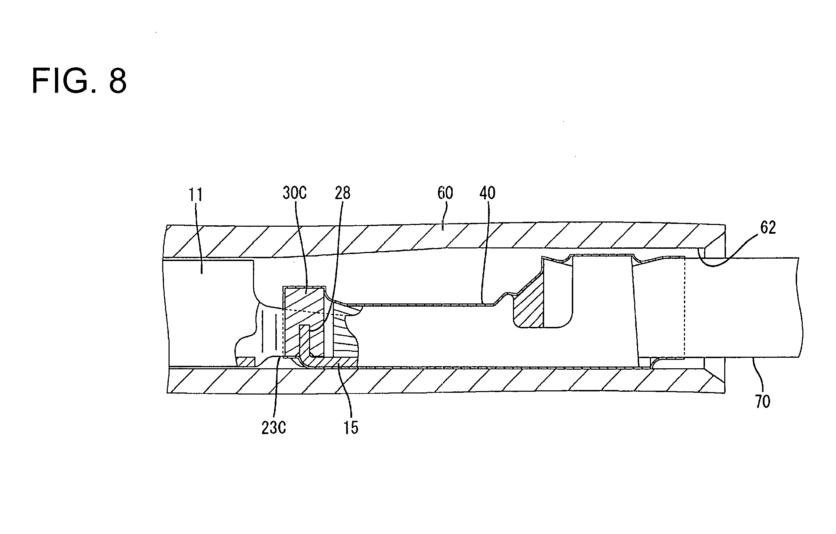

FIG. 8 shows a fourth embodiment of the present invention. In the fourth embodiment, a sealing portion 30C does not have a molded structure as in the third embodiment. A part of a bottom plate 15 of a constricted portion 23C is cut and bent inwardly to form a locking piece 28. The sealing portion 30C is formed of a resin material into a block in advance and mounted from above to be pierced with the locking piece 28. In this way, the sealing portion 30C is held in the constricted portion 23C.

### <Other Embodiments>

The present invention is not limited to the above described and illustrated embodiments. For example, the following embodiments are also included in the technical scope of the present invention.
(1) The shape of the constricted portion is arbitrary. For example, the constricted portion may be V-shaped in a plan or side view.
(2) The core and the terminal fitting may be made of the same kind of metal. Also in this case, the entrance of water into the wire connecting portion can be prevented.
(3) The tube may be structured such that a plurality of tubes having different diameters are laminated.
(4) The present invention is applicable also to a male terminal fitting with a projecting tab in front.

### List of Reference Signs

10 ... terminal fitting
11 ... terminal connecting portion
12 ... wire connecting portion
13 ... coupling portion
15 ... bottom plate
22 ... side plate
23, 23A, 23C... constricted portion
27 ... through hole
30, 30A, 30B, 30C ... sealing portion
33, 33B ... entering portion
40 ... tube
60 ... connector
61 ... housing
62 ... cavity
70 ... wire

## Claims

1. A terminal fitting, comprising:
a terminal connecting portion to be connected to a mating terminal fitting;
a wire connecting portion to be connected to a core at an end portion of a wire;
a coupling portion located between the terminal connecting portion and the wire connecting portion to connect the both and having a U-shaped cross section;
a heat-shrinkable tube to be attached to the wire connecting portion while covering the core;
a constricted portion provided at the coupling portion and constricted inwardly relative to the terminal connecting portion and the wire connecting portion; and
a sealing portion adapted to seal the interior of the constricted portion and to have an end part of the tube attached thereto.

2. A terminal fitting according to claim 1, wherein the coupling portion includes a bottom plate and a pair of side plates standing up from opposite lateral edges of the bottom plate, and the constricted portion is formed on both the bottom plate and the opposite side plates.

3. A terminal fitting according to claim 1 or 2, wherein:
the wire connecting portion includes a wire barrel to be connected to the core and an insulation barrel to be connected to a coating of the wire; and
the tube is attached to the sealing portion, the wire barrel and the insulation barrel and covers a leading end part of the coating.

4. A terminal fitting according to any one of claims 1 to 3, wherein both ends of the sealing portion are arranged at positions retracted inwardly from both ends of the terminal connecting portion.

5. A terminal fitting according to any one of claims 1 to 4, wherein the constricted portion is formed with a through hole and a part of the sealing portion serves as an entering portion to be inserted and filled in the through hole.

6. A terminal fitting according to claim 5, wherein the sealing portion is held in close contact with both inner and outer surfaces of the constricted portion by mold forming, and parts of the sealing portion at inner and outer sides of the constricted portion are connected to each other via the entering portion.

7. A terminal fitting according to any one of claims 1 to 4, wherein the sealing portion is formed of a resin material into a block in advance.

8. A terminal fitting according to any one of claims 1 to 7, wherein the constricted portion includes a straight portion extending in an axial direction, a first tapered portion located on the terminal connecting portion side and inclined gradually inwardly toward the straight portion and a second tapered portion located at the wire connecting portion side and inclined gradually inwardly toward the straight portion, and a leading end part of the core is arranged in the second tapered portion in a state where the wire connecting portion is connected to the core.

9. A terminal fitting according to any one of claims 1 to 8, wherein the sealing portion seals an entire U-shaped inner space in the constricted portion and surrounds the exterior of the constricted portion over the entire circumference.

10. A terminal fitting according to any one of claims 1 to 9, wherein the core is made of aluminum or aluminum alloy.
